# EUROPÄISCHE PATENTSCHRIFT

(11) **EP 0 736 426 B1**
(45) Veröffentlichungstag und Bekanntmachung des Hinweises auf die Patenterteilung: **02.06.1999**
(21) Anmeldenummer: 96104774.3
(22) Anmeldetag: 26.03.1996
(51) Int. Cl.: B60S 1/08

(54) **Autoglasscheibe für einen Regensensor**
Automobile glazing for a rain sensor
Vitrage automobile pour détecteur de pluie

(30) Priorität: 06.04.1995 DE 19512864
(43) Veröffentlichungstag der Anmeldung: 09.10.1996
(73) Patentinhaber: SAINT-GOBAIN VITRAGE, 92400 Courbevoie (FR)
(72) Erfinder: Sauer, Gerd, 52224 Stolberg (DE)
(74) Vertreter: Biermann, Wilhelm, Dr.-Ing. (Pat-Ass.)

(56) Entgegenhaltungen:
- EP-A- 0 420 196
- EP-A- 0 562 275
- DE-A- 4 142 146
- DE-A- 4 300 741
- DE-A- 4 318 114
- DE-C- 4 307 479
- DE-C- 4 330 710
- FR-A- 2 672 127
- GB-A- 2 208 434
- GB-A- 2 260 420
- PATENT ABSTRACTS OF JAPAN vol. 013, no. 112 (P-844), 17.März 1989 & JP-A-63 287986 (CANON INC), 25.November 1988,
- PATENT ABSTRACTS OF JAPAN vol. 018, no. 281 (P-1744), 27.Mai 1994 & JP-A-06 051054 (NIPPONDENSO CO LTD), 25.Februar 1994,

## Beschreibung

Die Erfindung betrifft eine Autoglasscheibe für eine einen Strahlensender und einen Strahlenempfänger umfassende lichtelektrische Sensoreinrichtung zur Erfassung des Benetzungsgrades ihrer Außenseite mit Niederschlag, mit einem mit der Autoglasscheibe optisch gekoppelten Strahlenleitkörper, durch den die von dem Strahlensender ausgehenden Strahlen unter einem flachen Winkel eingekoppelt und die an der Außenseite der Autoglasscheibe reflektierten Strahlen ausgekoppelt und zu dem Strahlenempfänger geleitet werden.

Bei Regensensoren dieser Art, wie sie beispielsweise aus der FR-A-2 672 127 bekannt sind, werden die Lichtstrahlen unter einem Winkel, der mindestens dem Winkel der Totalreflexion entspricht, in die Autoglasscheibe eingekoppelt, und der an ihrer Außenseite reflektierte Anteil wird vom Strahlenempfänger ausgewertet. Bei Vorhandensein von tropfenförmigem Niederschlag auf der Außenseite wird nämlich hierdurch ein Teil der Lichtstrahlen auf der Außenseite ausgekoppelt, und dieser Anteil der auf der Außenseite ausgekoppelten Lichtstrahlen nimmt mit zunehmender Anzahl der Niederschlagstropfen zu. Die vom Strahlenempfänger aufgenommene Strahlenintensität ist infolgedessen ein Maß für den Niederschlag.

Weitere Sensoreinrichtungen dieser Art sind beispielsweise in den Druckschriften DE 4142146 A1, DE 4300741 A1, DE 4307479 C1, DE 4318114 A1 und 4330710 C1 beschrieben. In allen diesen Fällen besteht der Strahlenleitkörper, der zum Einkoppeln und zum Auskoppeln der Lichtstrahlen notwendig ist, aus einem prismenartigen Glaskörper mit dem Querschnitt eines gleichschenkeligen Trapezes. Die Basisfläche des Glaskörpers ist mit der Oberfläche der Autoglasscheibe über einen die optische Ankoppelung sicherstellenden Kleber verbunden. Die den Schenkeln des Trapezes entsprechenden Flächen des Glaskörpers sind zur Bündelung bzw. zur Fokussierung der Lichtstrahlen jeweils mit einer Sammellinse versehen.

Strahlenleitkörper dieser Art aus Glas haben Dickenabmessungen in der Größenordnung von einem Zentimeter. Die Verklebung dieser Strahlenleitkörper mit der Autoglasscheibe erfolgt im Herstellwerk des Autos. Eine voraufgehende Montage des Strahlenleitkörpers, beispielsweise im Herstellwerk der Autoglasscheiben, scheidet unter den gegebenen Bedingungen aus, da derartige voluminöse Glaskörper auf den Autoglasscheiben deren Manipulation und Transport erschweren würden. Die üblichen Transportgestelle beispielsweise wären nämlich für den Transport derartig komplettierter Autoglasscheiben nicht mehr ohne weiteres verwendbar.

Der Erfindung liegt die Aufgabe zugrunde, eine für die spätere Anordnung eines Regensensors der genannten Art bestimmte Autoglasscheibe so auszugestalten, daß sie auch mit bereits vormontiertem Strahlenleitkörper gut manipulierbar ist und mit den üblichen Transportgestellen transportiert werden kann. Die Vormontage des Strahlenleitkörpers soll auf diese Weise bereits im Herstellwerk der Autoglasscheiben erfolgen können.

Gemäß der Erfindung wird diese Aufgabe dadurch gelöst, daß der Strahlenleitkörper ein in eine transparente Polymerfolie eingearbeitetes Volumenhologramm ist.

Hologramme können bekanntlich so ausgebildet werden, daß sie eine gewünschte optische Funktion erfüllen, beispielsweise auch die Funktion eines lichtlenkenden Prismas. Für den erfindungsgemäßen Zweck muß das Hologramm so ausgebildet sein, daß es die vom Lichtsender ausgehenden Lichtstrahlen durch Brechung und/oder Beugung derart von ihrer Einfallsrichtung ablenkt, daß sie unter einem Winkel, der größer ist als der Grenzwinkel der Totalreflexion an der Grenzfläche Luft-Glas, in das Glas eindringen und aus dem Glas austreten. Selbstverständlich muß das Hologramm bzw. die Trägerfolie des Hologramms durch einen transparenten Kleber mit einem geeigneten Brechungsindex an die Glasoberfläche optisch angekoppelt werden.

Folien mit einem eingearbeiteten Hologramm können mit sehr geringen Dickenabmessungen hergestellt werden. Wenn sie auf die Glasoberfläche aufgeklebt werden, kann die dadurch hervorgerufene Dickenänderung der Autoglasscheibe vernachlässigt werden. Da derartige Folien verhältnismäßig dünn sind, können sie bei Verbundglasscheiben auch ohne besondere Schwierigkeiten zwischen den beiden Einzelglasscheiben, das heißt in der die beiden Einzelglasscheiben miteinander verbindenden thermoplastischen Zwischenschicht, angeordnet werden. Eine derartige Anordnung hat den besonderen Vorteil, daß das Hologramm in idealer Weise durch die beiden Einzelglasscheiben gegen äußere Einflüsse geschützt ist.

Weitere Merkmale und Vorteile der Erfindung ergeben sich aus den Unteransprüchen. Die Erfindung ist nachfolgendend anhand verschiedener in den Zeichnungen gezeigter Ausführungsbeispiele beschrieben.

Von den Zeichnungen zeigt
- Fig. 1: eine monolithische Autoglasscheibe mit einem auf einer Oberfläche angeordneten holographischen Strahlenleitkörper, und
- Fig. 2: eine Autoglasscheibe aus Verbundglas mit einem in der thermoplastischen Zwischenschicht angeordneten holographischen Strahlenleitkörper.

Die Anordnung eines Regensensors auf einer Autoglasscheibe ist grundsätzlich an der Stelle sinnvoll, wo die Glasoberfläche von einem Scheibenwischer überstrichen wird, so daß der Scheibenwischermotor von dem Regensensor angesteuert werden kann, sobald sich eine bestimmte Menge von Niederschlagstropfen auf der Glasoberfläche befindet. Da in der Regel die Windschutzscheibe und in vielen Fällen auch die Heckscheibe mit einem Scheibenwischer versehen ist, kommt die erfindungsgemäße Anordnung in erster Linie für Windschutzscheiben und Heckscheiben von Kraftfahrzeugen zur Anwendung.

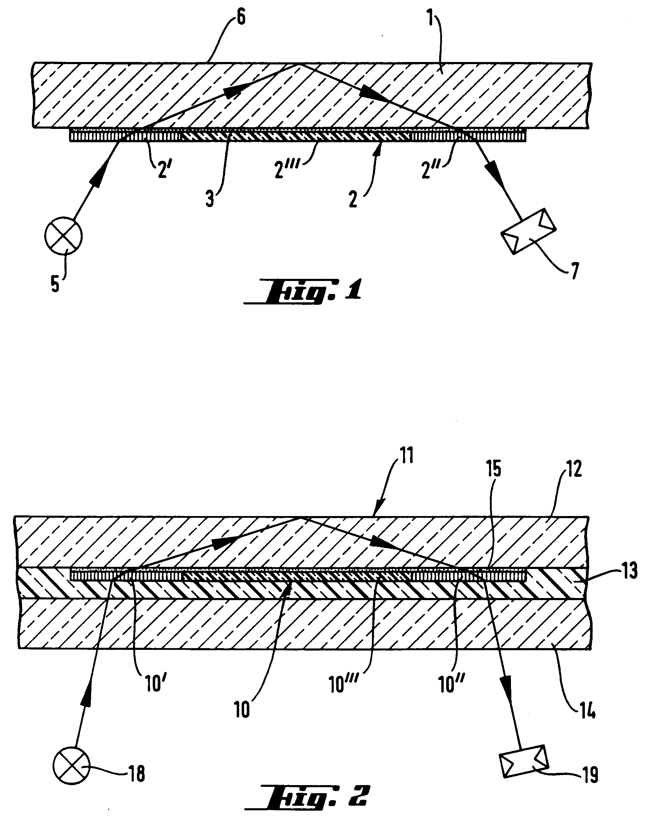

Bei der in Fig. 1 dargestellten Anordnung handelt es sich um eine monolithische Autoglasscheibe 1, insbesondere aus vorgespanntem Einscheibensicherheitsglas, auf der die das Hologramm enthaltende Polymerfolie 2 angeordnet ist. Monolithische Autoglasscheiben finden zwar als Windschutzscheiben nur in Ausnahmefällen Anwendung, doch bestehen die Heckscheiben von Kraftfahrzeugen üblicherweise aus solchen Einscheibensicherheitsglasscheiben.

Die das Hologramm enthaltende Polymerfolie 2 ist über einen geeigneten transparenten Kleber 3 mit der Innenseite der Autoglasscheibe 1 verklebt und optisch derart gekoppelt, daß an den Grenzflächen Polymerfolie-Kleber und Kleber-Glasoberfläche die Lichtstrahlen keine Ablenkung erfahren.

Der Aufbau des Hologramms in der Polymerfolie 2 ist so getroffen, daß es zwei voneinander getrennte aktive Bereiche 2' und 2'' aufweist, in denen die gewünschte Brechung oder Beugung der Lichtstrahlen erfolgt. Der mittlere Bereich 2''' zwischen den beiden aktiven Bereichen 2' und 2'' hat zweckmäßigerweise einen reflektierenden Charakter, so daß die zwischen den aktiven Bereichen 2' und 2'' reflektierten Lichtstrahlen im Bereich 2''' nicht aus der Glasoberfläche austreten.

Die schematische Darstellung läßt erkennen, wie die von der Lichtquelle 5 ausgehenden und auf geeignete Weise gebündelten Lichtstrahlen im Bereich 2' des Hologramms derart abgelenkt oder gebeugt werden, daß sie unter einem Winkel, der größer als der Grenzwinkel der Totalreflexion an der Grenzfläche Luft-Glas ist, in die Autoglasscheibe 1 eindringen. An ihrer Außenseite 6 werden die Lichtstrahlen bei Abwesenheit von Wassertropfen totalreflektiert. Der nach der Totalreflexion auf den Hologramm-Bereich 2'' auftreffende Anteil der Lichtstrahlen wird durch das Hologramm auf den lichtelektrischen Wandler 7 gelenkt. Das Signal des lichtelektrischen Wandlers 7 dient in der bekannten Weise zur Ansteuerung des Scheibenwischermotors.

Auch bei der in Fig. 2 dargestellten Ausführungsform kommt eine mit einem eingearbeiteten Hologramm versehene transparente Folie 10 zum Einsatz, die wiederum zwei aktive Bereiche 10' und 10'' mit lichtlenkenden bzw. lichtbeugenden Eigenschaften und einen mittleren Bereich 10''' mit reflektierenden Eigenschaften aufweist. In diesem Fall handelt es sich bei der Autoglasscheibe 11 jedoch um eine Verbundglasscheibe aus der äußeren Einzelglasscheibe 12, der thermoplastischen Zwischenschicht 13 und der inneren Einzelglasscheibe 14. Die Hologrammfolie 10 ist in diesem Fall zwischen den beiden Einzelglasscheiben 12 und 14 im Bereich der Zwischenschicht 13 angeordnet und durch Zwischenschaltung einer geeigneten dünnen Kleberschicht 15 optisch an die Einzelglasscheibe 12 angekoppelt. Die Wirkungsweise dieser Anordnung besteht darin, daß die von der Lichtquelle 18 kommenden gebündelten Lichtstrahlen unter einem geeigneten Einstrahlungswinkel in die innere Einzelglasscheibe 14 eingestrahlt werden. Sie treffen auf den Hologrammbereich 10' auf und werden von diesem derart abgelenkt bzw. gebeugt, daß sie unter einem Winkel, der größer als der Totalreflexionswinkel ist, in die äußere Einzelglasscheibe 12 eindringen. Damit die Lichtstrahlen im Bereich 10''' der Hologrammfolie nicht aus der äußeren Einzelglasscheibe 12 austreten, hat dieser Bereich 10''' des Hologramms wieder reflektierende Eigenschaften. Die äußere Einzelglasscheibe 12 wirkt infolgedessen im Bereich zwischen den Hologrammbereichen 10' und 10'' infolge Totalreflexion an ihren beiden Oberflächen bei Abwesenheit von Wassertropfen wie ein Lichtleiter. Die durch das Hologramm 10'' aus der äußeren Einzelglasscheibe 12 ausgekoppelten Lichtstrahlen fallen auf den lichtelektrischen Wandler 19, der seinerseits den Scheibenwischermotor ansteuert.

Häufig sind Verbundglasscheiben als Wärmeschutzscheiben ausgebildet, indem eine der beiden Einzelglasscheiben 12 oder 14 aus einer wärmestrahlenabsorbierenden Glaszusammensetzung besteht. In wärmestrahlenabsorbierenden Gläsern werden die Lichtstrahlen stärker gedämpft als in farblosen Gläsern. Wenn, wie es üblicherweise der Fall ist, die äußere Einzelglasscheibe 12 die Lichtstrahlen stark dämpft, kann die Funktionsfähigkeit des Sensors dadurch beeinträchtigt werden. Die in Fig. 2 dargestellte Anordnung hat den besonderen Vorteil, daß eine unerwünschte Dämpfung der totalreflektierten Lichtstrahlen vermieden werden kann, wenn die wärmeabsorbierende Einzelglasscheibe auf der Innenseite der Verbundglasscheibe angeordnet wird und die äußere Einzelglasscheibe 12 aus nichtabsorbierendem, das heißt normalem farblosen Glas besteht, das eine wesentlich geringere Dämpfung für Lichtstrahlen aufweist.

## Patentansprüche

1. Autoglasscheibe (1;11) für eine einen Strahlensender (5;18) und einen Strahlenempfänger (7;19) umfassende lichtelektrische Sensoreinrichtung zur Erfassung des Benetzungsgrades ihrer Außenseite (6) mit Niederschlag, mit einem mit der Autoglasscheibe (1;11) optisch gekoppelten Strahlenleitkörper (2;10), durch den die von dem Strahlensender (5,18) ausgehenden Strahlen unter einem flachen Winkel eingekoppelt und die an der Außenseite (6) der Autoglasscheibe (1;11) reflektierten Strahlen ausgekoppelt und zu dem Strahlenempfänger (7;19) geleitet werden, **dadurch gekennzeichnet,** daß der Strahlenleitkörper ein in eine transparente Polymerfolie (2;10) eingearbeitetes Volumenhologramm ist.

2. Autoglasscheibe nach Anspruch 1, dadurch gekennzeichnet, daß das Volumenhologramm einen zum Einkoppeln der Lichtstrahlen ausgebildeten Abschnitt (2';10') und einen zum Auskoppeln der Lichtstrahlen ausgebildeten Abschnitt (2'';10'') aufweist, die durch einen Abschnitt (2''';10''') mit reflektierenden Eigenschaften voneinander getrennt sind.

3. Autoglasscheibe nach Anspruch 1 oder 2, dadurch gekennzeichnet, daß die das Hologramm aufweisende Polymerfolie (2) mit der dem Fahrgastraum zugewandten Oberfläche der Autoglasscheibe (1) über einen transparenten Kleber (3) verklebt ist.

4. Autoglasscheibe nach Anspruch 1 oder 2, dadurch gekennzeichnet, daß die Autoglasscheibe (11) aus Verbundglas besteht, und daß die das Hologramm aufweisende Polymerfolie (10) in der thermoplastischen, die beiden Einzelglasscheiben (12,14) miteinander verbindenden Zwischenschicht (13) angeordnet ist.

5. Autoglasscheibe nach Anspruch 4, dadurch gekennzeichnet, daß die dem Fahrgastraum zugewandte Einzelglasscheibe (14) aus einem gefärbten wärmeabsorbierenden Glas, und die der Außenseite zugewandte Einzelglasscheibe (12) aus einem farblosen Glas besteht.

## Claims

1. Automobile glass pane (1; 11) for an opti-electrical sensor device, which comprises a beam emitter (5; 18) and a beam receiver (7; 19), for detection of the degree of wetting of its outer side (6) with precipitation, comprising a beam conductor body (2; 10) which is optically coupled with the automobile glass pane (1; 11) and by which the beams emitted by the beam emitter (5; 18) are coupled in at a flat angle and the beams reflected at the outer side (6) of the automobile glass pane (1; 11) are coupled out and conducted to the beam receiver (7; 19), characterised in that the beam conductor body is a volume hologram incorporated in a transparent polymer foil (2; 10).

2. Automobile glass pane according to claim 1, characterised in that the volume hologram comprises a section (2; 10'), which is constructed for coupling in of the light beams and a section (2''; 10'') which is constructed for coupling out of the light beams, which sections are separated from one another by a section (2'''; 10''') with reflective properties.

3. Automobile glass pane according to claim 1 or 2, characterised in that the polymer foil (2) having the hologram is glued by way of a transparent adhesive (3) to the surface of the automobile glass pane (1) facing the passenger compartment.

4. Automobile glass pane according to claim 1 or 2, characterised in that the automobile glass pane (11) consists of a laminated glass and that the polymer foil (10) having the hologram is arranged in the thermoplastic intermediate layer (13) gluing the two individual glass panes (12, 14) together.

5. Automobile glass pane according to claim 4, characterised in that the individual glass pane (14) facing the passenger compartment consists of a coloured heat-absorbing glass and the individual glass pane (12) facing the outer side consists of a colourless glass.

## Revendications

1. Vitrage pour automobiles (1; 11) pour un capteur photoélectrique constitué d'un émetteur de rayons (5; 18) et d'un récepteur de rayons (7; 19) et destiné à détecter le degré d'humidité du côté extérieur (6) du vitrage à la suite de précipitations, comportant un corps de guidage de rayons (2; 10) couplé optiquement au vitrage pour automobiles (1; 11) qui introduit les rayons émanant de l'émetteur de rayons (5; 18) sous un angle plat, qui fait sortir les rayons réfléchis sur le côté extérieur (6) du vitrage pour automobiles (1; 11) et qui les guide vers le récepteur de rayons (7; 19), caractérisé en ce que le corps de guidage de rayons est un hologramme intégré dans une feuille polymère transparente (2; 10).

2. Vitrage pour automobiles suivant la revendication 1, caractérisé en ce que l'hologramme est composé d'un segment (2'; 10') conçu pour introduire les rayons lumineux et d'un segment (2''; 10'') conçu pour faire sortir les rayons lumineux, séparés l'un de l'autre par un segment (2'''; 10''') présentant des propriétés réfléchissantes.

3. Vitrage pour automobiles suivant la revendication 1 ou 2, caractérisé en ce que la feuille polymère (2) contenant l'hologramme est collée au moyen d'une colle transparente (3) à la surface du vitrage pour automobiles (1) tournée vers l'habitacle.

4. Vitrage pour automobiles suivant la revendication 1 ou 2, caractérisé en ce que le vitrage pour automobiles (11) est en verre feuilleté et en ce que la feuille polymère (10) contenant l'hologramme est disposée dans la couche intermédiaire (13) thermoplastique reliant les deux feuilles de verre individuelles (12, 14).

5. Vitrage pour automobiles suivant la revendication 4, caractérisé en ce que la feuille de verre individuelle (14) tournée vers l'habitacle est faite d'un verre teinté absorbant la chaleur et la feuille de verre individuelle (12) tournée vers l'extérieur est faite d'un verre non teinté.
